# FASCICULE DE BREVET EUROPEEN

(11) **EP 2 396 523 B1**
(45) Date de publication et mention de la délivrance du brevet: **05.12.2012**
(21) Numéro de dépôt: 10707583.0
(22) Date de dépôt: 26.01.2010
(51) Int. Cl.: F01N 3/28, F01N 3/20, B01J 35/04, B01J 37/02, B01D 53/94, B01J 23/40, B01J 35/00

(54) **CATALYSEUR POUR LE TRAITEMENT DES GAZ D'ECHAPPEMENT D'UN MOTEUR A COMBUSTION ET PROCEDE D'OBTENTION D'UN TEL CATALYSEUR**
KATALYSATOR ZUR BEHANDLUNG DER ABGASE EINES VERBRENNUNGSMOTORS UND VERFAHREN ZUM ERHALT SOLCH EINES KATALYSATORS
CATALYST FOR TREATING THE EXHAUST GASES OF A COMBUSTION ENGINE, AND METHOD FOR OBTAINING SUCH A CATALYST

(30) Priorité: 12.02.2009 FR 0950867
(43) Date de publication de la demande: 21.12.2011
(73) Titulaire: Peugeot Citroën Automobiles SA, 78140 Vélizy Villacoublay (FR)
(72) Inventeur: MATTHESS, Nils, F-92300 Levallois-perret (FR)
(86) Numéro de dépôt international: PCT/FR2010/050109
(87) Numéro de publication internationale: WO 2010/092273

(56) Documents cités:
- EP-A- 0 161 743
- EP-A- 0 273 232
- EP-A- 1 229 219
- EP-A- 1 538 309
- WO-A-2008/028061
- JP-A- 2006 224 071
- US-A- 4 134 733

## Description

L'invention porte sur le domaine de la dépollution des gaz d'échappement d'un moteur à combustion.

Les normes concernant les émissions des moteurs à combustion, notamment pour les automobiles, sont de plus en plus sévères. Non seulement les niveaux en polluants à ne pas dépasser sont de plus en plus bas mais la durabilité réglementaire des dispositifs de dépollution augmente pour les normes à venir, et passe notamment de 100 000 km à 160 000 km dans le cas de la norme Euro5. On emploie pour le traitement des gaz d'échappement des moteur à combustion des catalyseurs, qui sont des dispositifs onéreux, en particulier lorsqu'on cherche à obtenir une efficacité de conversion des polluants élevée. En effet, un catalyseur est constitué d'un substrat généralement recouvert d'une phase active à base de métaux précieux, pouvant être notamment du platine (Pt), du palladium (Pd), ou encore du rhodium (Rh), dont le coût est particulièrement élevé.

Les catalyseurs perdent de leur efficacité au cours de leur fonctionnement sur véhicule. Une des principales causes de dégradation des catalyseurs est leur vieillissement thermique lié au niveau élevé des températures subies. Hormis ce vieillissement thermique, d'autres phénomènes comme l'empoisonnement réduisent leur efficacité à convertir les polluants. Si le facteur de détérioration premier des catalyseurs automobiles reste la température et les gradients de température subis par le système de dépollution, d'autres paramètres comme l'empoisonnement lié aux éléments de l'huile de lubrification du moteur et aux impuretés des carburants peuvent significativement dégrader l'efficacité d'un catalyseur. En effet, par exemple pour une application automobile classique, le passage d'huile de lubrification dans les chambres de combustion du moteur s'accroît irrémédiablement avec l'utilisation du véhicule, et devient notamment prépondérante au-delà de 100 000 km. Des éléments de l'huile tout comme les impuretés du carburant se retrouvent donc dans les gaz d'échappement du moteur et peuvent se déposer dans les systèmes catalytiques, ce qui entraine deux phénomènes distincts néfastes :
● Un empoisonnement physique : il s'agit du bouchage de la porosité du catalyseur ou formation par exemple d'un vernis de pyrophosphate de zinc qui empêche les molécules de polluants de diffuser au travers de la phase active et ainsi d'atteindre les sites actifs.
● Un empoisonnement chimique : c'est l'occupation plus ou moins réversible des sites actifs du catalyseur par des molécules comme le phosphore ou le soufre qui empêcheront ensuite les polluants d'être convertis.

Cet empoisonnement aura donc pour conséquence de dégrader l'efficacité des catalyseurs, sachant en outre que cet effet est cumulatif et en partie irréversible.

Aujourd'hui, il existe des solutions pour limiter le risque d'empoisonnement du catalyseur. On peut citer par exemple les « pièges à SOx » qui servent à stocker les sulfates (le soufre du carburant et de l'huile). Mais il n'est que peu (voire pas) utilisé dans le domaine des véhicules particuliers. En outre, un tel dispositif ne piège pas tous les poisons (il est dédié au piégeage des sulfates).

On notera qu'un catalyseur, et en particulier un catalyseur destiné à la dépollution des gaz d'échappement d'un moteur à combustion interne est généralement composé d'un substrat, pouvant être un monolithe en céramique, enduit d'une phase active catalytique que l'on peut désigner par le terme anglo-saxon de « washcoat ». Cette phase active a, avant séchage (calcination), une forme plus ou moins pâteuse ou liquide que l'on désigne par l'appellation anglophone « slurry ». Suivant la terminologie française, on parlera de phase active comme équivalent du terme « washcoat » et de phase active en solution liquide comme équivalent du terme «slurry ». Par ailleurs, on désigne conventionnellement par entrée du catalyseur ou du substrat la face par laquelle pénètrent les gaz d'échappement à traiter, et par sortie la face par laquelle ces gaz ressortent une fois traités par le catalyseur.

On connait par ailleurs des technologies de catalyseurs dites « zonées », c'est-à-dire des catalyseurs offrant des zones avec des compositions de phase active spécifiques. Mais ce type de technologies est coûteux à produire et est généralement utilisé pour accroitre l'efficacité du catalyseur grâce à l'ajout d'une plus grande quantité de métaux précieux en entrée du monolithe. Si le « zonage » peut permettre de conserver une activité importante sur un catalyseur usé (son efficacité à neuf étant supérieure), il n'empêche en rien le phénomène d'empoisonnement du catalyseur. Bien au contraire, l'empoisonnement dans le cas d'un catalyseur zoné peut avoir des conséquences très fâcheuses puisque le potentiel de conversion de ce type de pain catalytique se situe quasiment exclusivement en entrée là où les poisons se déposent préférentiellement.
On connait des catalyseurs avec une zone de faible teneur en phase active en entrée du substrat dans document US4134733A.

On connait enfin dans certaines applications automobiles, et plus particulièrement au niveau des stratégies de calibration moteur, des solutions coûteuses qui permettent de compenser l'impact de l'empoisonnement des catalyseurs, voire de le limiter s'il s'agit d'un empoisonnement au soufre. En effet, cet empoisonnement étant en partie réversible, il est possible en augmentant la température du catalyseur de désorber la plupart des molécules de soufre et ainsi de retrouver des performances catalytiques satisfaisantes. Cependant, si un empoisonnement du catalyseur par le soufre est grandement réversible, ce n'est pas le cas de tous les types d'empoisonnement. En particulier, le Phosphore et le Zinc peuvent former un vernis de pyrophosphate de zinc qui empêche la diffusion des espèces polluantes vers les sites actifs (métaux précieux) et qui dégrade donc fortement l'efficacité du système.

L'invention vise à résoudre le problème de l'empoisonnement des catalyseurs en proposant un catalyseur particulièrement résistant à ce phénomène mais présentant néanmoins une bonne efficacité, ainsi que le procédé d'obtention d'un tel catalyseur.

Plus précisément, l'invention porte donc sur catalyseur pour le traitement des gaz d'échappement d'un moteur à combustion, comportant un substrat monolithique comportant des canaux recouverts d'une phase active catalytique répartie de manière non homogène dans lesdits canaux, présentant une zone de faible teneur en phase active sur une longueur comprise entre 1,5 et 3 cm en entrée du substrat, ladite zone de faible teneur en phase active présentant une teneur en phase active d'au plus 10% de la teneur moyenne en phase active du catalyseur en dehors de ladite zone de faible teneur, et caractérisé en ce qu'il présente, immédiatement après la zone de faible teneur en phase active et sur une seconde longueur comprise entre 0,5 et 1,5 cm, une zone de forte teneur en phase active présentant une teneur en phase active supérieure d'au moins 10% à la teneur moyenne en phase active du catalyseur, en dehors desdites zones de faible teneur en phase active et de forte teneur en phase active. L'inventeur a constaté que l'empoisonnement lié aux éléments d'huile moteur ou aux impuretés du carburant concerne essentiellement les premiers centimètres du catalyseur, pris selon le sens d'écoulement du flux gazeux qu'il traite. Ainsi, l'idée développée dans l'invention est-elle de réduire au maximum la quantité de métaux précieux déposés dans une zone déterminée à l'entrée du catalyseur, voire de la supprimer. Les premiers centimètres du catalyseur se voient alors fortement empoisonnés lors de l'utilisation du catalyseur. Cependant, ces premier centimètres ont un coût d'obtention faible, du fait de la faible teneur (ou de l'absence) de métaux précieux dans cette zone. En outre, en proposant une zone de forte teneur en phase active, immédiatement après la zone de faible teneur, on dispose ainsi d'un système plus efficace lors de la phase d'amorçage du catalyseur (montée en température) la zone d'amorçage du substrat présentant un petit surplus de métaux précieux.

De préférence, le catalyseur comporte un moyen détrompeur, permettant l'identification du côté du substrat présentant une zone de faible teneur en phase active, ou empêchant un montage inversé du catalyseur. Ce moyen peut être de tout type, visuel ou mécanique, et consister par exemple en une flèche indiquant le sens de l'écoulement du flux de gaz ou tout autre repère coloré notifié sur l'un des côtés du substrat,.

Pour l'obtention d'un tel catalyseur, l'invention porte également sur un procédé d'imprégnation particulier du substrat du catalyseur, afin de réduire la quantité de métaux précieux en entrée du catalyseur.

Le procédé ainsi développé consiste donc essentiellement en une modification du procédé connu de « poussée du slurry» dans les canaux du substrat. Ce procédé se déroule de la manière suivante : l'imprégnation d'une couche de phase active se fait en une seule fois par poussée de la phase active en solution liquide dans les canaux du monolithe à l'aide d'un dispositif à piston. Une fois que la phase active a enduit toute la longueur des parois internes des canaux du monolithe et qu'elle réapparaît à l'autre extrémité du substrat, un système d'aspiration aspire l'excédent de slurry, au niveau de la face du substrat par laquelle on a introduit la phase active en solution liquide, pour éviter d'en laisser sur l'extérieur des canaux et de dégrader la qualité du substrat. Si le procédé développé dans l'invention s'applique en particulier à la méthode par poussée du slurry, il est également applicable à d'autres méthodes analogues, dans lesquelles on fait pénétrer par un moyen quelconque la phase active en solution liquide par une extrémité du substrat du catalyseur.

L'invention porte donc sur un procédé d'obtention d'un catalyseur selon l'invention, dans lequel on effectue une imprégnation homogène du substrat par une phase active en solution liquide, puis on aspire une part la phase active en solution liquide au niveau de la sortie des canaux du substrat, afin d'ôter l'excédent de phase active en solution, caractérisé en ce qu'on applique une aspiration telle qu'elle permette l'obtention d'une zone de faible teneur en phase active en entrée du substrat, présentant une teneur en phase active d'au plus 10% de la teneur moyenne en phase active du catalyseur en dehors de ladite zone de faible teneur. L'objectif de l'aspiration n'est donc pas uniquement d'ôter l'excédent de phase active en solution liquide, tel qu'on le pratique classiquement dans les procédés d'imprégnation par poussée du slurry connus dans l'état de la technique, mais de permettre la formation d'une zone de faible teneur en phase active. La dépression exercée sera donc supérieure à ce qui peut être généralement appliqué.

De préférence, on effectue l'imprégnation homogène du substrat lors d'une phase d'imprégnation par poussée de la phase active, lors de laquelle on pousse une phase active en solution liquide à l'intérieur des canaux du substrat monolithique jusqu'à ce que la phase active couvre uniformément les canaux du substrat sur l'intégralité de leur longueur. Cette solution est simple à mettre en oeuvre, d'autant que seuls les moyens pour réaliser l'aspiration successive à cette phase sont à adapter.

On intervient donc sur l'une des dernières phases du processus d'imprégnation, en appliquant une aspiration de la phase active en solution liquide, non pas uniquement afin de récupérer l'excédent de phase active en solution en sortie du substrat, mais telle que la quantité de métaux précieux déposés (proportionnelle à la quantité de slurry) soit moindre en entrée du monolithe. En fonction du niveau d'aspiration exercée, on obtient une zone de quelques centimètres de faible concentration en phase active.

Cette aspiration selon l'invention offre un avantage : elle génère un surplus de washcoat quelques centimètres après l'entrée du pain, ce qui augmente la quantité de métaux précieux de cette zone, créant ainsi une zone de forte teneur en imprégnation. Or, dans cette zone située peu après l'entrée du catalyseur, les échanges thermiques et les échanges de matières sont bien plus efficaces que dans le reste du catalyseur. C'est d'ailleurs dans cette zone que ces systèmes catalytiques s'amorcent en premier. Autrement dit, c'est dans cette zone que les réactions catalytiques de conversion des polluants démarrent en premier lieu. Par l'adoption de cette variante de l'invention, on peut ainsi gagner de l'efficacité notamment lorsque le moteur fonctionne à froid.

On note par ailleurs que l'idée développée dans l'invention est également applicable à toute méthode permettant l'obtention dans un premier temps d'une imprégnation homogène des canaux du catalyseur, par exemple par « douchage » du catalyseur. A ce premier temps succède alors une phase d'aspiration de la phase active en solution au niveau de la future face d'entrée du catalyseur, permettant la formation d'une zone de faible teneur en phase active en entrée du catalyseur.

De préférence, on récupère pour un réemploi ultérieur la phase active en solution liquide aspirée dans le cadre du procédé selon l'invention. L'un des objectifs de l'intention étant de ne pas employer des métaux précieux qui ne seraient que peu efficaces pour la conversion des polluants afin de réduire le coût d'obtention des catalyseurs, il est évidemment important pour tirer profit de l'invention de prévoir un moyen de récupération du washcoat mécaniquement éliminé pour réemployer la phase active en solution liquide ou au moins en recycler les métaux précieux.

L'invention visant préférentiellement une application automobile, elle porte enfin sur un véhicule automobile dont la ligne d'échappement comporte un catalyseur conforme à l'invention.

L'invention est décrite plus en détail ci-après et en référence aux figures représentant schématiquement le catalyseur et son procédé d'obtention dans leur mode de réalisation préférentiel.

La figure 1 présente schématiquement la répartition de la phase active catalytique dans un catalyseur selon l'invention.

La figure 2 présente schématiquement les différentes phases d'un procédé d'obtention d'un catalyseur selon l'invention.

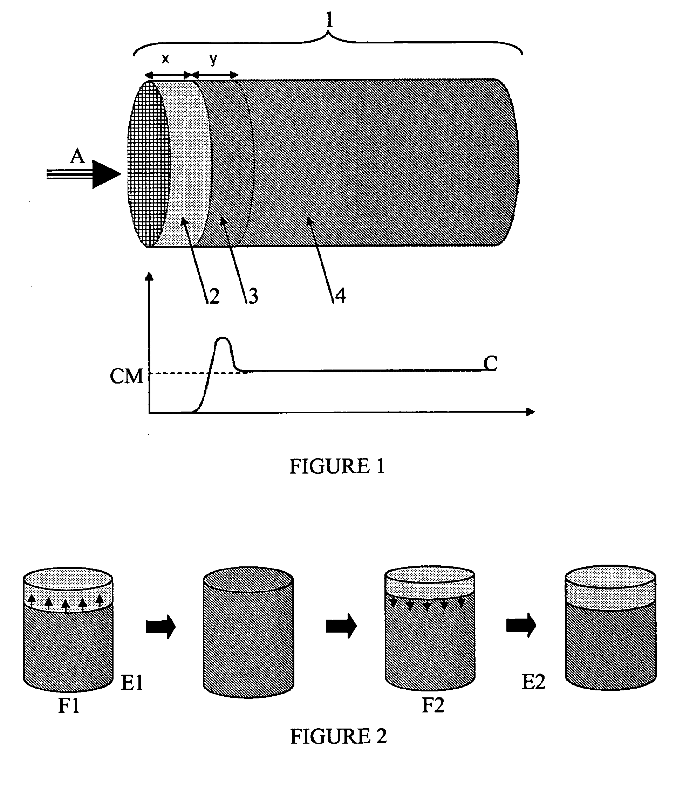

Sur la figure 1, on a représenté schématiquement la répartition de la phase active catalytique dans un catalyseur selon le mode de réalisation préférentiel de l'invention, en délimitant des zones de concentrations différentes sur la représentation schématique d'un pain catalytique 1 (schéma supérieur de la figure 1) , et sur un graphique en regard du pain catalytique 1 (schéma inférieur de la figure 1).

Sur le graphique en partie inférieure de la figure 1, on a porté en ordonnée la charge en métaux précieux (Pt, Pd, Rh) du catalyseur (cette charge est proportionnelle à la teneur en phase active du catalyseur), sur une échelle ayant pour référence la charge (ou teneur) moyenne (CM) du catalyseur en métaux précieux en dehors des zones de faible et forte charge définies ultérieurement, et en abscisse la longueur du catalyseur selon son axe principal (en regard de la représentation schématique du catalyseur en partie supérieure de la figure 1). La courbe C représente l'évolution de la charge en métaux précieux, dans un mode de réalisation préférentiel, par rapport à la charge moyenne, le long de l'axe principal du catalyseur.

Le catalyseur 1 est prévu pour traiter un flux de gaz d'échappement s'écoulant dans la direction d'écoulement A mentionnée. Le catalyseur 1 comporte une première zone en entrée, dite zone de faible teneur en phase active 2, contenant au plus 10% de la teneur moyenne en métaux précieux (ou en phase active) du catalyseur en dehors de cette zone de faible teneur 2. Cette zone de faible teneur en phase active 2 sera la principale zone empoisonnée physiquement ou chimiquement lors du vieillissement du catalyseur. Ainsi, il n'y a pas ou peu de métaux précieux inutilement déposés dans le catalyseur, dans la mesure où des métaux précieux déposés dans cette zone se seraient rapidement montrés inefficaces dans leur rôle de conversion des polluants. La zone de faible teneur en phase active 2 a une première longueur x, mesurée à partir de la face d'entrée du catalyseur et le long de l'axe principal de ce dernier, de 1,5 à 3 cm. En effet, en particulier dans les applications automobiles, et selon l'application considérée, l'empoisonnement majoritaire du catalyseur se produit sur une telle longueur à l'entrée du catalyseur.

Le catalyseur présente, immédiatement après la zone de faible teneur en phase active 2, une zone de forte teneur en phase active 3, d'une seconde longueur y de 0,5 à 1,5 cm, et présentant une teneur en phase active supérieure d'au moins 10% à la teneur moyenne en phase active du catalyseur, en dehors des zones de faible teneur en phase active 2 et de forte teneur en phase active 3. La zone de forte teneur est peu soumise à l'empoisonnement, mais correspond à la première zone active du catalyseur lors de sa montée en température. Il est donc primordial que cette zone soit particulièrement active quant à la conversion des polluants.

Le reste du catalyseur, à savoir la zone restante 4, présente une répartition homogène de la phase active, dans une teneur moyenne permettant l'atteinte d'un niveau de traitement des gaz prédéterminé, en tenant compte de la teneur en phase active des zones de faible et de forte teneur en phase active.

Ainsi, en partant d'une efficacité de conversion recherchée, on peut calculer pour un catalyseur de dimension donnée la quantité totale de métaux précieux à embarquer dans le catalyseur. Plutôt que de disposer des métaux précieux directement à l'entrée du catalyseur, il est avantageux de ménager une zone de faible teneur 2, suivie d'une zone de forte teneur 3. L'efficacité recherchée sera atteinte, car la quantité totale de métaux précieux le permet, et cette performance sera durable, car peu de métaux précieux seront rendus inefficaces lors du vieillissement du catalyseur et donc de son empoisonnement. Un dimensionnement au plus juste de la quantité de métaux précieux à embarquer dans le catalyseur est ainsi possible.

La figure 2 présente schématiquement un second procédé d'obtention d'un catalyseur selon l'invention. Dans ce procédé, la phase active en solution liquide est poussée dans les canaux du catalyseur dans une étape de poussée du slurry F1. On introduit le slurry par la face du catalyseur qui constituera la face de sortie des gaz lors de l'utilisation du catalyseur. La poussée du slurry est poursuivie jusqu'à ce que la phase active en solution liquide recouvre les canaux du catalyseur 1 sur l'ensemble de leur longueur. Dans une phase de ré-aspiration du slurry F2, une dépression est exercée sur la face du catalyseur 1 qui constituera la face de sortie du catalyseur 1 lors de son utilisation. Cette dépression est généralement exercée pour récupérer la phase active en solution liquide excédentaire. Dans l'invention, on exerce une dépression d'un niveau largement supérieur, de sorte qu'elle permette l'obtention d'une zone de faible teneur en phase active 2 en entrée du substrat. Dans l'invention, cette dépression est adaptée à de multiples paramètres (quantité et viscosité du slurry, géométrie des canaux, densité cellulaire du substrat, etc.) pour permettre l'obtention d'une zone de faible teneur en phase active 2 contenant au plus 10% de la teneur moyenne en phase active du catalyseur en dehors de la zone de faible teneur en phase active 2, sur une longueur comprise entre 1,5 et 3 cm. Il pourra résulter de ce procédé une zone de forte teneur en phase active 3, non représentée sur cette figure, immédiatement après la zone de faible teneur 2.

Le processus d'imprégnation du substrat par le « slurry » ainsi développé permet l'obtention d'un catalyseur conforme à l'invention. Il permet donc d'obtenir un convertisseur catalytique dont l'empoisonnement inhérent à son utilisation par exemple sur un véhicule n'affecte pas ou seulement peu les performances en conversion des polluants, sans pour autant utiliser un artifice dédié, comme un piège à SOx, ou une technologie d'imprégnation couteuse comme le zone-coating.

L'ensemble des métaux précieux est utilisé d'une façon efficace pour le traitement des gaz d'échappement, en évitant leur empoisonnement par des éléments comme le Phosphore (P), le Zinc (Zn), le Calcium (Ca) ou encore le soufre (S).

L'invention présente un intérêt économique : on peut réduire les marges que l'on doit prévoir habituellement à cause des phénomènes d'empoisonnement et donc réduire la quantité de métaux précieux nécessaire pour l'obtention d'un niveau souhaité de dépollution des gaz d'échappement.

L'invention présente également un intérêt technique : avec moins de problèmes d'empoisonnement du catalyseur, il y a moins de risques sur le respect de la durabilité réglementaire des dispositifs de dépollution. En effet, avec un amorçage du catalyseur plus fiable et constant dans le temps malgré le vieillissement du catalyseur, et une dérive de l'efficacité de conversion moins importante avec les kilomètres parcourus, le catalyseur selon l'invention est plus facile à mettre au point et à calibrer pour l'obtention d'un taux de conversion souhaité qu'un catalyseur tel que connu dans l'état de la technique. En outre, un catalyseur selon l'invention est moins sensible à la qualité du carburant employé par le moteur dont les gaz d'échappement sont traités. Ceci est particulièrement avantageux dans un contexte où la qualité des carburants distribués est très inégale d'un pays à l'autre, voire tend à se dégrader dans certains pays où l'emploi croissant de bio-carburant, par exemple, par introduction d'éthanol dans l'essence est un facteur de d'augmentation de l'empoisonnement des catalyseurs de post-traitement, le bioéthanol contenant des quantités non négligeables d'éléments susceptibles d'empoisonner toute phase active catalytique (les normes actuelles s'établissant par exemple à 0,10 mg/kg de Cuivre, 20 mg/l de Chlore, et 0,50mg/l de Phosphore). Enfin, l'utilisation d'additifs métalliques pro-octanes comme le Methylcyclopentadienyl Manganèse Tricarbonyl (MMT) ou le ferrocène dans certains pays engendrent des risques supplémentaires d'empoisonnement des catalyseurs et justifient toujours un peu plus l'utilisation d'un catalyseur défini tel que dans l'invention.

## Revendications

1. Catalyseur (1) pour le traitement des gaz d'échappement d'un moteur à combustion, comportant un substrat monolithique comportant des canaux recouverts d'une phase active catalytique répartie de manière non homogène dans lesdits canaux, présentant une zone de faible teneur en phase active (2) sur une longueur (x) comprise entre 1,5 et 3 cm en entrée du substrat, ladite zone de faible teneur en phase active (2) présentant une teneur en phase active d'au plus 10% de la teneur moyenne en phase active du catalyseur en dehors de ladite zone de faible teneur (2), et **caractérisé en ce qu'**il présente, immédiatement après la zone de faible teneur en phase active (2) et sur une seconde longueur (y) comprise entre 0,5 et 1,5 cm, une zone de forte teneur en phase active (3) présentant une teneur en phase active supérieure d'au moins 10% à la teneur moyenne en phase active du catalyseur, en dehors desdites zones de faible teneur en phase active (2) et de forte teneur en phase active (3).

2. Catalyseur (1) selon la revendication 1, **caractérisé en ce qu'**il comporte un moyen détrompeur, permettant l'identification du côté du substrat présentant une zone de faible teneur en phase active (2), ou empêchant un montage inversé du catalyseur.

3. Procédé d'obtention d'un catalyseur (1) selon la revendication 1 ou la revendication 2, dans lequel on effectue une imprégnation homogène du substrat par une phase active en solution liquide, puis on aspire une part la phase active en solution liquide au niveau de la sortie des canaux du substrat, afin d'ôter l'excédent de phase active en solution, **caractérisé en ce qu'**on applique une aspiration telle qu'elle permette l'obtention d'une zone de faible teneur en phase active (2) en entrée du substrat, présentant une teneur en phase active d'au plus 10% de la teneur moyenne en phase active du catalyseur en dehors de ladite zone de faible teneur.

4. Procédé selon la revendication 3, **caractérisé en ce qu'**on effectue l'imprégnation homogène du substrat lors d'une phase d'imprégnation par poussée de la phase active, lors de laquelle on pousse une phase active en solution, liquide à l'intérieur des canaux du substrat monolithique jusqu'à ce que la phase active couvre uniformément les canaux du substrat sur l'intégralité de leur longueur.

5. Procédé selon la revendication 3 ou la revendication 4, **caractérisé en ce qu'**on récupère la phase active en solution liquide aspirée, pour un réemploi ultérieur.

6. Véhicule automobile dont la ligne d'échappement comporte un catalyseur selon la revendication 1 ou la revendication 2.

## Claims

1. A catalyst (1) for treating the exhaust gases of a combustion engine, comprising a monolithic substrate comprising channels covered with a catalytic active phase distributed in a non-homogeneous manner in the said channels, having an area with a low active phase content (2) over a length (x) comprised between 1.5 and 3 cm at the inlet of the substrate, the said low active phase content area (2) having an active phase content of at most 10% of the average active phase content of the catalyst outside the said low content area (2), and **characterized in that** it has, immediately after the area with a low active phase content (2) and on a second length (y) comprised between 0.5 and 1.5 cm, an area with a high active phase content (3) having an active phase content that is higher by at least 10% than the average active phase content of the catalyst, outside the said areas of low active phase content (2) and of high active phase content (3).

2. The catalyst (1) according to Claim 1, **characterized in that** it comprises a foolproof means, permitting the identification of the side of the substrate having an area with low active phase content (2), or preventing an inverted mounting of the catalyst.

3. A method for obtaining a catalyst (1) according to Claim 1 or Claim 2, in which a homogeneous impregnation of the substrate is carried out by an active phase in liquid solution, then in portion the active phase is aspirated in liquid solution at the level of the outlet of the channels of the substrate, so as to remove the excess of active phase in solution, **characterized in that** an aspiration is applied such that it permits the obtaining of an area with low active phase content (2) at the inlet of the substrate, having an active phase content of at most 10% of the average active phase content of the catalyst outside the said low content area.

4. The method according to Claim 3, **characterized in that** the homogeneous impregnation of the substrate is carried out during an impregnation phase by thrust of the active phase, during which an active phase in liquid solution is pushed in the interior of the channels of the monolithic substrate until the active phase covers the channels of the substrate uniformly over the whole of their length.

5. The method according to Claim 3 or Claim 4, **characterized in that** the active phase in aspirated liquid solution is recovered, for a subsequent re-use.

6. A motor vehicle, the exhaust line of which comprises a catalyst according to Claim 1 or Claim 2.

## Patentansprüche

1. Katalysator (1) zur Behandlung der Abgase eines Verbrennungsmotors, der ein monolithisches Substrat aufweist, das Kanäle aufweist, die mit einer aktiven katalytischen Phase abgedeckt sind, die nicht homogen in den Kanälen verteilt ist, die eine Zone mit geringem Gehalt an aktiver Phase (2) auf einer Länge (x), die zwischen 1,5 und 3 cm beträgt, am Eingang des Substrats aufweist, wobei die Zone mit geringem Gehalt an aktiver Phase (2) einen Gehalt an aktiver Phase von höchstens 10 % des mittleren Gehalts an aktiver Phase des Katalysators außerhalb der Zone mit geringem Gehalt (2) aufweist, und **dadurch gekennzeichnet, dass** er unmittelbar nach der Zone mit geringem Gehalt an aktiver Phase (2) und auf einer zweiten Länge (y), die zwischen 0,5 und 1,5 cm beträgt, eine Zone mit hohem Gehalt an aktiver Phase (3) aufweist, die einen Gehalt an aktiver Phase aufweist, der um mindestens 10 % höher ist als der mittlere Gehalt an aktiver Phase des Katalysators außerhalb der Zonen mit geringem Gehalt an aktiver Phase (2) und mit einem hohen Gehalt an aktiver Phase (3).

2. Katalysator (1) nach Anspruch 1, **dadurch gekennzeichnet, dass** er ein Unverwechselbarkeitsmittel aufweist, das die Identifikation der Seite des Substrats, die eine Zone mit geringem Gehalt an aktiver Phase (2) aufweist, erlaubt, oder eine umgekehrte Montage des Katalysators verhindert.

3. Verfahren zum Erhalten eines Katalysators (1) nach Anspruch 1 oder Anspruch 2, bei dem man ein homogenes Tränken des Substrats durch eine aktive Phase in flüssiger Lösung ausführt und dann einen Teil der aktiven Phase in flüssiger Lösung auf dem Niveau des Ausgangs der Kanäle des Substrats absaugt, um den Überschuss an aktiver Phase in Lösung zu entfernen, **dadurch gekennzeichnet, dass** man ein Ansaugen derart anwendet, dass es das Erhalten einer Zone mit geringem Gehalt an aktiver Phase (2) am Eingang des Substrats erlaubt, die einen Gehalt an aktiver Phase von höchstens 10 % des mittleren Gehalts an aktiver Phase des Katalysators außerhalb der Zone mit geringem Gehalt aufweist.

4. Verfahren nach Anspruch 3, **dadurch gekennzeichnet, dass** man das homogene Tränken des Substrats bei einer Tränkphase durch Schieben der aktiven Phase ausführt, bei der man eine aktive Phase in flüssiger Lösung in das Innere der Kanäle des monolithischen Substrats schiebt, bis die aktive Phase die Kanäle des Substrats auf der Gesamtheit ihrer Länge gleichförmig bedeckt.

5. Verfahren nach Anspruch 3 oder 4, **dadurch gekennzeichnet, dass** man die angesaugte aktive Phase in flüssiger Lösung für eine spätere Wiederverwendung zurückgewinnt.

6. Kraftfahrzeug, dessen Abgaslinie einen Katalysator nach Anspruch 1 oder Anspruch 2 aufweist.
